# EUROPEAN PATENT APPLICATION

(11) **EP 4 663 067 A1**
(43) Date of publication of application: **17.12.2025**
(21) Application number: 24795937.2
(22) Date of filing: 18.04.2024
(51) Int. Cl.: A45D 20/12

(54) **HAIR DRYER AND HANDHELD HAIR DRYER**

(30) Priority: 25.04.2023 CN 202310456589; 25.06.2023 CN 202321622880 U; 27.07.2023 CN 202310940067
(71) Applicant: Nanjing Chervon Industry Co., Ltd., Nanjing, Jiangsu 211106 (CN)
(72) Inventor: SHI, Yuanming, Nanjing, Jiangsu 211106 (CN); GU, Kairong, Nanjing, Jiangsu 211106 (CN); ZHANG, Wenhao, Nanjing, Jiangsu 211106 (CN); YAMAOKA, Toshinari, Nanjing, Jiangsu 211106 (CN); LI, Jingwei, Nanjing, Jiangsu 211106 (CN); MARTINEZ, Michael, Nanjing, Jiangsu 211106 (CN); TUCKER, Dane, Nanjing, Jiangsu 211106 (CN); GRULKE, Justin, Nanjing, Jiangsu 211106 (CN); RUSSELL, Scott, Nanjing, Jiangsu 211106 (CN)
(74) Representative: Sun, Yiming
(86) International application number: PCT/CN2024/088515
(87) International publication number: WO 2024/222556

(57) **Abstract**

Provided is a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, the illumination device includes light-emitting portions, and the total lumen of all the light-emitting portions of the illumination device is greater than or equal to 280 lm. With the blower, it is convenient to work in dim light or at night.

## Description

This application claims priority to Chinese Patent Application No. 202310456589.5 filed with the China National Intellectual Property Administration (CNIPA) on Apr. 25, 2023, Chinese Patent Application No. 202321622880.7 filed with the CNIPA on Jun. 25, 2023, and Chinese Patent Application No. 202310940067.2 filed with the CNIPA on Jul. 27, 2023, the disclosures of which are incorporated herein by reference in their entireties.

### TECHNICAL FIELD

The present application relates to the technical field of power tools and, in particular, to a blower.

### BACKGROUND

A blower is a power tool commonly used for garden maintenance and can quickly clean fallen leaves, sand, and the like. However, existing blowers are very inconvenient to use when tools are put away after work in the evening or when work is performed in dim light or at night.

Therefore, a blower is urgently needed to solve the preceding technical problem.

### SUMMARY

An object of the present application is to provide a blower with which it is convenient to work in dim light or at night.

To achieve the preceding object, the present application adopts the technical solutions below. A blower includes: a blower tube for an airflow to pass through; a fan assembly including fan blades, where the fan blades are rotatable about the fan axis of the fan assembly; a motor configured to drive the fan assembly to rotate; and a battery pack coupling portion configured to connect a battery pack for powering the blower. The blower further includes an illumination device, the illumination device includes light-emitting portions, and the total lumen of all the light-emitting portions of the illumination device is greater than or equal to 280 lm.

In an example, the illumination device further includes a light-transmissive portion, and the light-transmissive portion covers at least part of the light-emitting portions.

In an example, the illumination device is configured to be detachable from the blower.

In an example, each of the light-emitting portions is one or a combination of at least two of a point light source, a surface light source, and a LED light source.

In an example, a light-emitting portion is configured as a complete ring.

In an example, when viewed downward from directly above the blower, a light-emitting region of the light-emitting portion is substantially in the shape of a cone, and the included angle between a generatrix of the cone and the rotation axis of the cone is β, where β is greater than or equal to 0° and less than or equal to 60°.

In an example, the illumination device includes multiple light-emitting portions, and the multiple light-emitting portions are arranged at intervals and form a ring through enclosure.

In an example, the total lumen of the illumination device is less than or equal to 4680 lm.

In an example, the total rated power of the illumination device is greater than or equal to 1.8 W and less than or equal to 27 W.

In an example, the color temperature of the illumination device is greater than or equal to 3500 K and less than or equal to 6500 K.

In an example, the illumination device is capable of emitting light of at least two colors.

In an example, the illumination device is capable of providing a safety indication, a fault indication, and a battery pack power reminder, or the light-emitting portions are capable of projecting images.

In an example, the illumination device includes at least two light-emitting portions.

In an example, the blower further includes an operation handle and a housing, where the blower tube is detachably connected to the housing, the operation handle is connected to the blower tube or the housing, and one of the light-emitting portions is disposed on the operation handle.

In an example, the illumination device further includes a switch assembly configured to trigger the one of the light-emitting portions, and the switch assembly is disposed on the operation handle.

In an example, the blower further includes an illumination power source for powering the illumination device.

In an example, the light-emitting portions are capable of being off after a preset time following the stoppage of the motor.

In an example, the illumination device is configured to be capable of adjusting the brightness of the light-emitting portions according to ambient brightness.

In an example, the illumination device is configured to be capable of transmitting a control signal with a user terminal to adjust light emission parameters of the light-emitting portions.

In an example, the blower is a handheld blower.

The present application further provides a handheld blower. The handheld blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The handheld blower further includes an illumination device, the illumination device includes light-emitting portions, and at least one of the light-emitting portions is disposed on the blower tube.

In an example, at least part of the light-emitting portions are disposed on the outer wall of the blower tube.

In an example, the light-emitting portions are configured as a complete ring.

In an example, along the axial direction of the blower tube, the distance between the at least one of the light-emitting portions and an air outlet of the blower tube is L0, and L0 is less than or equal to 900 mm.

In an example, the length of the blower tube along the axis of the blower tube is defined as a blower tube length L1, the distance between the at least one of the light-emitting portions and an air outlet of the blower tube is L0, and the ratio LO/L1 of L0 to L1 is higher than or equal to 0 and lower than or equal to 1.

In an example, the distance between the at least one of the light-emitting portions and an air outlet of the blower tube is defined as L0, the distance from the blower tube to the center of a trigger is defined as L2, and the ratio of L0 to L2 is higher than or equal to 0 and lower than or equal to 0.7.

In an example, a cable housing is configured on the blower tube, and the cable housing is formed with a channel for a cable of the illumination device to pass through.

In an example, the blower further includes a housing and a coupling mechanism, where the blower tube is detachably connected to the housing, the coupling mechanism includes a terminal connected to the blower tube and a terminal coupling portion connected to the housing, the cable is electrically connected to the terminal, and the terminal is inserted into and mates with the terminal coupling portion.

In an example, the illumination device further includes a switch assembly configured to trigger one of the light-emitting portions, and the maximum distance between the switch assembly and the one of the light-emitting portions is less than or equal to 5 cm.

In an example, a light-emitting member of one of the light-emitting portions extends along a first straight line, and the included angle between the first straight line and the axis of the blower tube is greater than or equal to 10 degrees and less than or equal to 60 degrees.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack coupling portion configured to connect a battery pack, where the battery pack is capable of powering the motor. The blower further includes: an illumination device for illuminating a working region of the blower; and an illumination power source for powering the illumination device.

In an example, the blower further includes a self-power generation module, where the self-power generation module is capable of generating power through winds blown from the blower or sunlight, and the self-power generation module powers the illumination device.

In an example, the illumination device includes a light-emitting portion, and the light-emitting portion is capable of being off after a preset time following the stoppage of the motor.

In an example, the illumination device includes a light-emitting portion and is capable of adjusting the brightness of the light-emitting portion according to ambient brightness.

In an example, the illumination device includes a light-emitting portion and is capable of transmitting a control signal with a user terminal to adjust a light emission parameter of the light-emitting portion.

In an example, the illumination device includes a light-emitting portion and further includes a switch assembly, where the light-emitting portion is capable of being turned on or off through the switch assembly, and/or the brightness of the light-emitting portion is capable of being adjusted through the switch assembly, and/or an emitted color of the light-emitting portion is capable of being selected through the switch assembly, and/or the light-emitting portion is capable of being triggered through the switch assembly to perform projection, and/or a light-emitting mode of the light-emitting portion is capable of being selected through the switch assembly.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, and the total rated power of the illumination device is greater than or equal to 1.8 W and less than or equal to 27 W.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, and the color temperature of light emitted by the illumination device is greater than or equal to 3500 K and less than or equal to 6500 K.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device capable of emitting light of at least two colors.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, and the illumination device is capable of providing at least one of a safety indication, a fault indication, a battery pack power reminder, or an image projection.

The present application further provides a blower. The blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, the illumination device includes light-emitting portions, and at least one of the light-emitting portions is disposed on the blower tube.

In an example, at least part of the light-emitting portions are disposed on the outer wall of the blower tube.

In an example, along the axial direction of the blower tube, the distance between the at least one of the light-emitting portions and an air outlet of the blower tube is L0, and L0 is less than or equal to 900 mm.

In an example, a cable housing is configured on the blower tube, and the cable housing is formed with a channel for a cable of the illumination device to pass through.

In an example, the blower further includes a housing and a coupling mechanism, where the blower tube is detachably connected to the housing, the coupling mechanism includes a terminal connected to the blower tube and a terminal coupling portion connected to the housing, the cable is electrically connected to the terminal, and the terminal is inserted into and mates with the terminal coupling portion.

In an example, the illumination device further includes a switch assembly configured to trigger one of the light-emitting portions, and the maximum distance between the switch assembly and the one of the light-emitting portions is less than or equal to 5 cm.

In an example, the illumination device further includes a switch assembly, where the light-emitting portions are capable of being turned on or off through the switch assembly, and/or the brightness of the light-emitting portions are capable of being adjusted through the switch assembly, and/or emitted colors of the light-emitting portions are capable of being selected through the switch assembly, and/or the light-emitting portions are capable of being triggered through the switch assembly to perform projection, and/or light-emitting modes of the light-emitting portions are capable of being selected through the switch assembly.

The present application further provides a handheld blower. The handheld blower includes: a blower tube for an airflow to pass through; a fan assembly including fan blades, where the fan blades are rotatable about the fan axis of the fan assembly; a motor configured to drive the fan assembly to rotate; and a battery pack capable of powering the blower. The blower further includes an illumination device, the illumination device includes a light-emitting portion, the illumination device further includes a switch assembly configured to trigger the light-emitting portion, and the maximum distance between the switch assembly and the light-emitting portion is less than or equal to 5 cm.

The present application further provides a blower. The blower includes: a blower tube for an airflow to pass through, where the blower tube includes an air outlet, and the airflow flows out from the air outlet; a fan assembly including fan blades, where the fan blades are rotatable about the fan axis of the fan assembly; a motor configured to drive the fan assembly to rotate; and a battery pack capable of powering the blower. The blower further includes an illumination device, the illumination device includes a light-emitting portion, and when the included angle α between the blower tube axis of the blower tube and a blown surface is 30 degrees and the minimum distance H from the air outlet to the blown surface is 15 cm, the illuminance of light generated by the illumination device is greater than or equal to 50 lux, where the illuminance is measured, in front of the blower, at the point on the blown surface that is 1 m away from the foremost end of the air outlet.

In an example, the illuminance of the light generated by the illumination device is greater than or equal to 70 lux.

In an example, the illuminance of the light generated by the illumination device is greater than or equal to 100 lux.

In an example, the illuminance of the light generated by the illumination device is greater than or equal to 50 lux, where the illuminance is measured, behind the blower, at the point on the blown surface that is 0.5 m away from the foremost end of the air outlet.

In an example, the illuminance of the light generated by the illumination device is greater than or equal to 100 lux, where the illuminance is measured, behind the blower, at the point on the blown surface that is 0.5 m away from the foremost end of the air outlet.

The present application has the beneficial technical effects below.

The illumination device is provided, various parameters of the illumination device are limited, and functions of the illumination device are configured so that the light-emitting portions can illuminate the working region of the blower. Thus, it is more convenient to work with the blower in dim light and at night, thereby improving user experience.

### BRIEF DESCRIPTION OF DRAWINGS

FIG. 1 is a structural view of a first handheld blower.
FIG. 2 is an exploded view of the handheld blower in FIG. 1.
FIG. 3 is a structural view showing part of a first handheld blower.
FIG. 4 is an enlarged view of a region in FIG. 3.
FIG. 5 is an exploded view of a lamp assembly.
FIG. 6 is a structural view of a second handheld blower.
FIG. 7 is an exploded view of an illumination device.
FIG. 8 is a side view of a handheld blower.
FIG. 9 is a structural view of a third handheld blower.
FIG. 10 is an exploded view of a lamp assembly in FIG. 9.
FIG. 11 is a schematic view of the handheld blower in FIG. 9 from another viewing angle.
FIG. 12 is a structural view showing the housing and the blower tube of the handheld blower in FIG. 9.
FIG. 13 is a schematic view showing the coupling mechanism of the handheld blower in FIG. 9.
FIG. 14 is a structural view of a fourth handheld blower.
FIG. 15 is a side view of the handheld blower in FIG. 14.
FIG. 16 is a top view of the handheld blower in FIG. 14.
FIG. 17 is a structural view of a backpack blower.
FIG. 18 is a schematic view of a backpack blower in operation.
FIG. 19 is a structural view of a display.
FIG. 20 is an exploded view of a display.
FIG. 21 is a schematic view of a light-emitting portion.
FIG. 22 is a schematic view of another light-emitting portion.
FIG. 23 is a side view of a backpack blower system according to an example.
FIG. 24 is a perspective view of a backpack device in FIG. 23.
FIG. 25 is a plan view of the backpack device in FIG. 24.
FIG. 26 is a plan view of a device body in FIG. 24.
FIG. 27 is an exploded view of the device body in FIG. 26.
FIG. 28 is a perspective view of a shoulder strap assembly in FIG. 24.
FIG. 29 is an exploded view of the shoulder strap assembly in FIG. 28.
FIG. 30 is a perspective view of a waist belt assembly in FIG. 24.
FIG. 31 is a side view of the waist belt assembly in FIG. 30.
FIG. 32 is a top view of the waist belt assembly in FIG. 30.
FIG. 33 is an exploded view of the waist belt assembly in FIG. 30.
FIG. 34 is a schematic view of a backpack blower provided with illumination devices in an example.
FIG. 35 is a schematic view of a backpack blower provided with illumination devices in another example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present application provides a blower 10. The blower 10 accelerates an airflow through the rotation of a fan and uses the airflow to push objects that need to be moved. The blower 10 is commonly used for cleaning roads, gardens, and the like. The specific structure of the blower 10 is described in detail below.

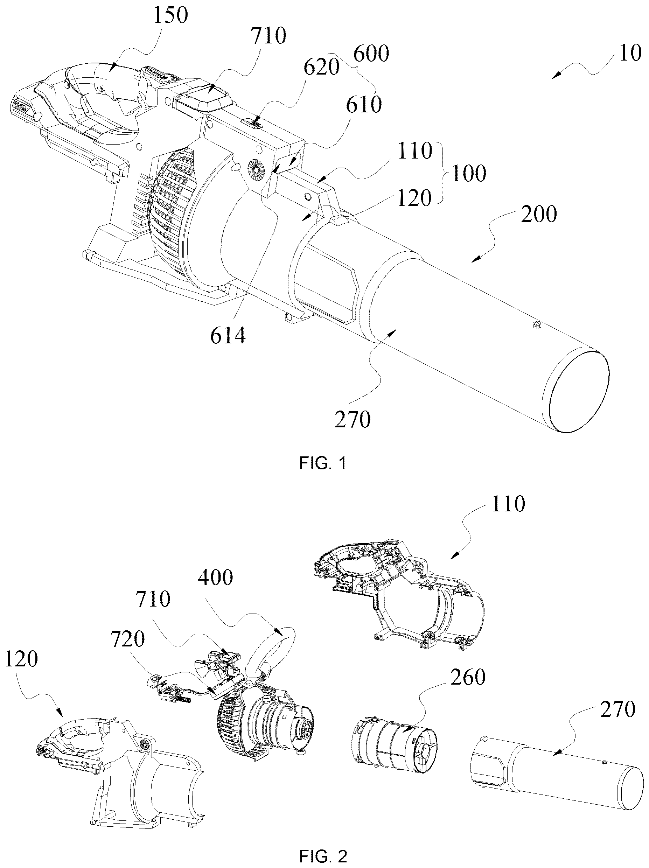

As shown in FIGS. 1 and 2, the blower 10 includes a housing 100, a blow and suction structure 200, a control assembly 720, and a battery pack 130. An accommodating space formed by the housing 100 may accommodate at least part of the blow and suction structure 200. The housing 100 is formed with or connected to a grip 150 for a user to hold. In this example, as shown in FIG. 2, the housing 100 includes a left housing 110 and a right housing 120. The left housing 110 and the right housing 120 are fastened to each other and together form the grip 150 for the user to hold. The blow and suction structure 200 includes a pipe assembly 260, a fan assembly, a motor, and a blower tube 270. The fan assembly includes fan blades. The motor can drive the fan blades to rotate about the fan axis of the fan assembly. Both the fan assembly and the motor are mounted in the pipe assembly 260. The blower tube 270 is connected to the housing 100. The blower tube 270 and the pipe assembly 260 are coaxially disposed. The pipe assembly 260 is partially disposed in the housing 100 and partially disposed in the blower tube 270, and the blower tube 270 is located at an end of an air outlet of the pipe assembly 260. During the rotation of the fan blades, the airflow enters from the air inlet at the rear of the pipe assembly 260 and is discharged from the air outlet at the front end of the blower tube 270 after being accelerated by the fan blades. The control assembly 720 is configured to control a running state of the blower 10 according to the user's operation. The battery pack 130 is configured to power the blower 10. In some examples, the blower 10 is a handheld blower. The handheld blower further includes a handle 400. The handle 400 is connected to the housing 100 and disposed on the front side of the grip 150. The handle 400 and the grip 150 may be held by two hands of the user, respectively, thereby facilitating the maintenance of the stability of the blower 10 in operation.

As shown in FIG. 1, the blower 10 further includes an illumination device 600. The illumination device 600 is configured to illuminate a working region of the blower 10 when the blower 10 works, so as to improve brightness for a surrounding environment. Thus, the blower 10 is enabled to work well in an environment with relatively dark light so that user experience is improved. Optionally, in some examples, the battery pack 130 may power the illumination device 600. In some examples, the blower 10 further includes an illumination power source for powering the illumination device 600. In this example, the illumination power source is a power supply component independent of the battery pack 130. Optionally, the illumination power source may be a battery, a storage battery, or the like that is detachably connected to the blower 10. In some examples, the blower 10 further includes a self-power generation module. The self-power generation module is capable of generating power through winds blown from the blower 10, and the self-power generation module powers the illumination device 600. In some examples, the self-power generation module may be a component for generating power through sunlight. It is to be noted that the module for self-power generation by means of wind and sunlight is an existing component, and therefore working principles and detailed structures thereof are not described in detail here.

As shown in FIG. 1, the illumination device 600 includes a lamp assembly 610. The lamp assembly 610 includes a light-emitting portion 614 capable of emitting light. Optionally, the light-emitting portion 614 is one or a combination of at least two of a point light source, a surface light source, and an LED light source, and those skilled in the art may select and configure the type of the light-emitting portion 614 according to requirements.

In some examples, the total lumen of the illumination device 600 is greater than or equal to 280 lm and less than or equal to 4680 lm. In some examples, the total rated power of the illumination device 600 is greater than or equal to 1.8 W and less than or equal to 27 W. In some examples, the total color temperature of the illumination device 600 is greater than or equal to 3500 K and less than or equal to 6500 K.

It is to be noted that "the total lumen", "the total rated power", and "the total color temperature" here refer to total values outputted by the illumination device 600. That is to say, when the illumination device 600 includes multiple light-emitting portions 614, the total lumen refers to the sum of the lumens outputted by all the light-emitting portions 614, the total rated power refers to the sum of the rated powers of all the light-emitting portions 614, and the total color temperature refers to the sum of the color temperatures of all the light-emitting portions 614. A lumen refers to a rated light flux value outputted by the light-emitting portion 614 and also refers to the nominal light flux value of the light-emitting portion 614. For the light-emitting portion 614, the lumen of the light-emitting portion may be defined in the following manner. The lumen is measured at a position 50 cm away from the light-emitting direction of the light-emitting portion 614, and the measured lumen is defined as the lumen of the light-emitting portion 614. For the illumination device 600 constituted by the multiple light-emitting portions 614, the lumen may be measured at a position 50 cm away from the illumination device, and the measured lumen is the total lumen of the illumination device 600.

The case where the illumination device 600 includes the multiple light-emitting portions 614 is discussed below. In some examples, the lumen of each light-emitting portion 614 may be greater than or equal to 100 lm, and the specific lumen of the light-emitting portion 614 may be 120 lm, 140 lm, 150 lm, 160 lm, 180 lm, or the like. In an example, the rated power range of the light-emitting portion 614 is about 0.9 W. In some examples, the specific rated power of the light-emitting portion 614 may be 0.9 W, 1.1 W, 1.3 W, or the like. In an example, the color temperature range of the light-emitting portion 614 is about 4000 K, 4500 K, or 5000 K.

In an example, the illumination device 600 includes 6 light-emitting portions 614. The total rated power formed by the 6 light-emitting portions 614 is 5.4 W, and the total lumen of the 6 light-emitting portions 614 is about 900 lm.

In some examples, the illumination device 600 is communicatively connected to the control assembly 720 so that the light-emitting portion 614 can be off after a preset time following the stoppage of the motor. That is, the illumination device 600 is intelligently turned off, thereby improving the user experience. Optionally, the preset time may be 3s, 5s, 7s, or the like and is not specifically limited here. In some examples, the user may configure the illumination device 600 to select an appropriate preset time.

In some examples, the light-emitting portion 614 can emit light of at least two colors. Optionally, the light-emitting portion 614 may emit white light, which has better brightness and is suitable for use in normal weather. The light-emitting portion 614 may emit yellow light, which has strong penetrability and is more suitable for use on foggy days. Optionally, the light-emitting portion 614 may emit red light. When the blower works in complex construction conditions, the red light is emitted and can serve as a warning to the outside. In other examples, the colors emitted by the light-emitting portion 614 are not limited to the preceding colors. Optionally, the illumination device 600 may include at least two light-emitting portions 615, and each light-emitting portion 615 correspondingly emits light of one color.

In some examples, the light-emitting portion 614 can provide a safety indication, a fault indication, and a power reminder of the battery pack 130. Optionally, the light-emitting portion 614 can flash at different frequencies and provide the safety indication, the fault indication, and the power reminder at different flashing frequencies, respectively. It is to be understood that the light-emitting portion 614 can emit light of different colors to provide the safety indication, the fault indication, and the power reminder, respectively. Optionally, the light-emitting portion 614 can project an image. The image may be a brand logo or a model of the product so that a certain advertising and publicity effect can be achieved.

In some examples, the illumination device 600 includes at least two light-emitting portions 614. The at least two light-emitting portions 614 may be turned on separately. Optionally, one of the light-emitting portions 614 may be set to a low-beam mode, and one of the light-emitting portions 614 may be set to a high-beam mode, so as to satisfy different usage requirements. Of course, the two light-emitting portions 614 may be turned on simultaneously so that the illumination device 600 has a higher illumination intensity and a larger illumination range. It is to be noted that the low-beam mode and the high-beam mode are collectively referred to as light emission modes of the light-emitting portion 614. Optionally, different light-emitting portions 614 may be disposed at different positions on the blower 10. Thus, while illuminating the front of the blower 10, the illumination device 600 can illuminate the sides and rear of the blower 10, thereby avoiding the case where the user falls down or bumps because the user cannot see a road clearly.

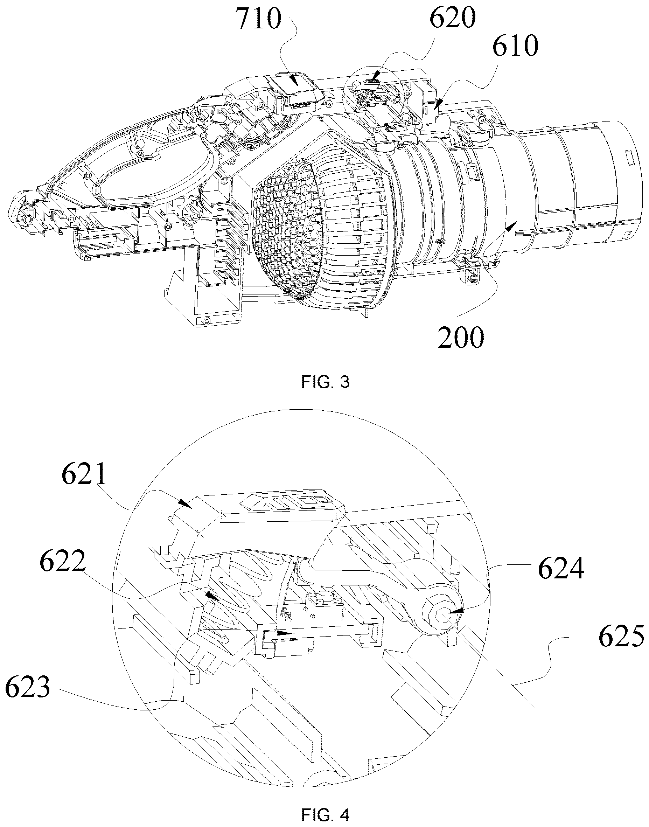

In this example, as shown in FIGS. 1 and 4, the illumination device 600 further includes a switch assembly 620. The switch assembly 620 is configured to control a working state of the lamp assembly 610. It is to be understood that the control of the lamp assembly 610 by the switch assembly 620 includes, but is not limited to, turning on and off the light-emitting portion 614, adjusting the brightness of the light-emitting portion 614, selecting an emitted color of the light-emitting portion 614, triggering the light-emitting portion 614 to perform projection, selecting a light-emitting mode of the light-emitting portion 614, adjusting a flashing frequency of the light-emitting portion 614, and the like. In an example, the maximum distance between the switch assembly 620 and the light-emitting portion 614 is less than or equal to 5 cm so that the length of the cable between the switch assembly 620 and the light-emitting portion 614 can be shortened. Further, the cables inside the blower 10 are neat and are not easily damaged. In the example where the illumination device 600 is mounted on an operation handle 910, the switch assembly 620 may also be located on the operation handle 910.

It is to be noted that the illumination device 600 may include only the lamp assembly 610 and does not include the switch assembly 620. Here, "the illumination device 600 does not include the switch assembly 620", which means that the illumination device 600 does not include the physical structure of the switch assembly 620 shown in FIG. 1. In some examples, the illumination device 600 further includes a communication module. The user may communicate with the communication module through a terminal device such as a mobile phone to control the lamp assembly 610. Optionally, the communication module may be a Bluetooth module, a Wi-Fi module, or the like. In some examples, the illumination device 600 may be provided with a light sensing device. When the light sensing device recognizes that ambient brightness decreases to a threshold, the lamp assembly 610 automatically lights up. In some examples, the switch assembly 620 may be combined with other switch structures of the blower 10.

In some examples, as shown in FIG. 1, the lamp assembly 610 is disposed on the front side of the handle 400, thereby preventing the handle 400 from blocking light of the lamp assembly 610.

As shown in FIGS. 3 and 4, the lamp assembly 610 is connected to the housing 100. The lamp assembly 610 is disposed toward the front side of the blower 10, and the switch assembly 620 is disposed toward the top of the blower 10, thereby making it convenient for the user to see and operate the switch assembly 620. The switch assembly 620 includes a button 621, a pivot shaft 624, an elastic member 622, and a first circuit board 623. The button 621 is pivotally connected to the housing 100 via the pivot shaft 624, and the axis of the pivot shaft 624 is a pivot axis 625. The first circuit board 623 is opposite to the button 621, and the first circuit board 623 is electrically connected to the lamp assembly 610. The elastic member 622 is disposed between the button 621 and the housing 100. When the user presses the button 621, the button 621 rotates about the pivot axis 625 and approaches the first circuit board 623, thereby triggering the electrical components on the first circuit board 623 and lighting the lamp assembly 610 up. When the user releases the button 621, the elastic member 622 resets the button 621. In some examples, a mechanical switch is disposed on the first circuit board 623. When the button 621 is reset, the mechanical switch is turned off, and the lamp assembly 610 is turned off accordingly. In some examples, an electronic switch 640 is disposed on the first circuit board 623. When the button 621 is reset, the lamp assembly 610 is not turned off, and the user needs to press the button 621 again to turn off the lamp assembly 610.

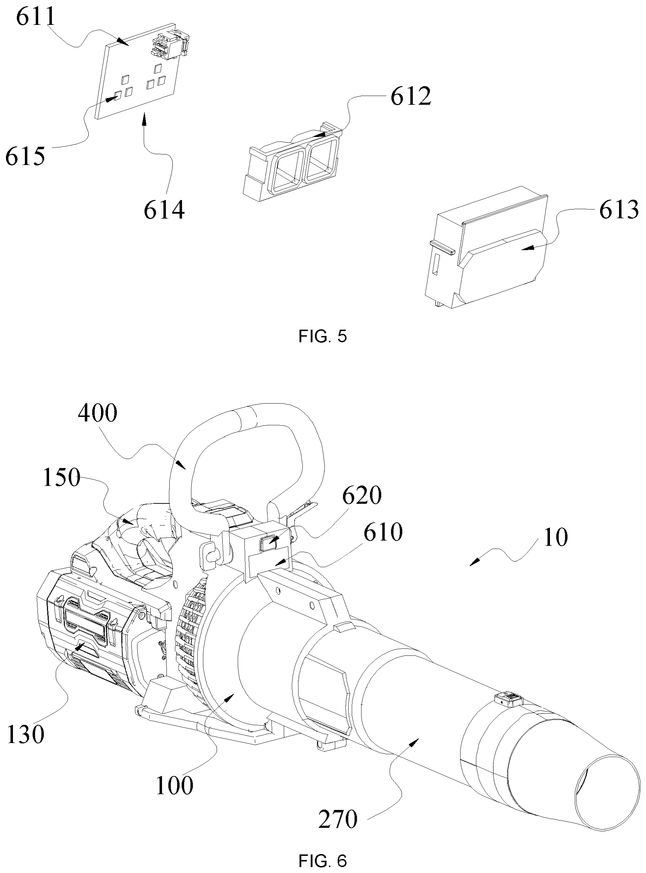

As shown in FIG. 5, the lamp assembly 610 includes a second circuit board 611 electrically connected to the first circuit board 623. The light-emitting portions 614 are disposed on the second circuit board 611. When the first circuit board 623 is triggered through the button 621, the second circuit board 611 causes the light-emitting portions 614 to be on or off. In an example, the light-emitting portions 614 may be lamps. The lamp assembly 610 further includes a light guide portion 612 and a light-transmissive portion 613. The light guide portion 612 is disposed on the front side of the second circuit board 611, and a light guide channel is provided on the light guide portion 612. The light-emitting portions 614 at least partially extend into the light guide channel, thereby limiting the light direction of the light-emitting portions 614. The light-transmissive portion 613 covers the front side of the second circuit board 611, thereby protecting the second circuit board 611, the light-emitting portions 614, and the light guide portion 612 and ensuring that the light of the light-emitting portions 614 can propagate.

In some examples, as shown in FIG. 6, the switch assembly 620 and the lamp assembly 610 are integrated, thereby making the appearance of the blower 10 simpler and more aesthetic.

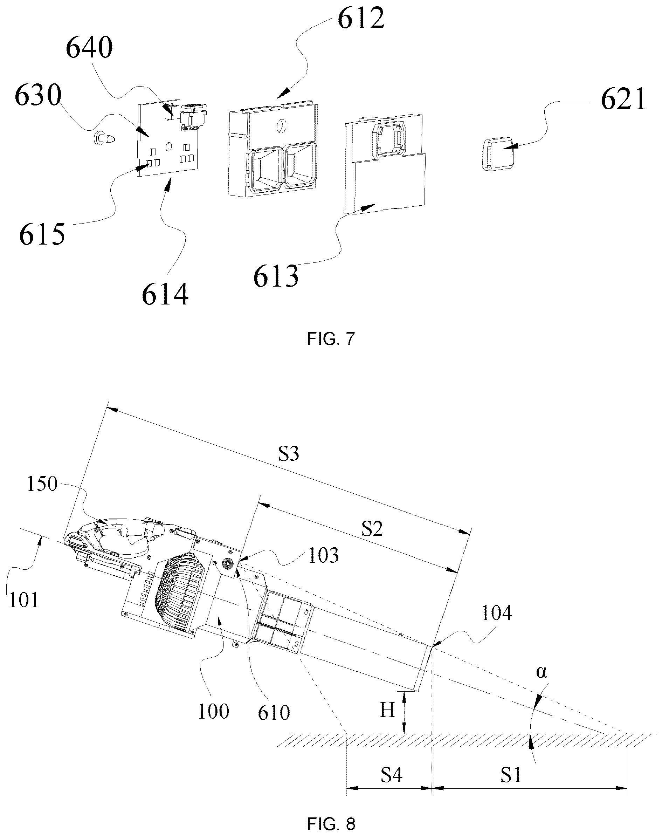

As shown in FIGS. 6 and 7, the integrated structure of the switch assembly 620 and the lamp assembly 610 is disposed toward the front side of the blower 10, thereby illuminating a working environment in front of the blower 10. The illumination device 600 includes a third circuit board 630 and a button 621 opposite to the third circuit board 630. The light-emitting portions 614 are disposed on the third circuit board 630. An electronic switch 640 is also disposed on the third circuit board 630. In some examples, when the user presses the button 621, the button 621 triggers the electronic switch 640, and the third circuit board 630 causes the light-emitting portions 614 to light up. When the user presses the button 621 again, the electronic switch 640 is turned off, and the light-emitting portions 614 are turned off accordingly. In some examples, the light-emitting portions 614 have at least two brightness levels. When the user presses the button 621 for the first time, the light-emitting portions 614 emit light at the first brightness level. When the user presses the button 621 for the second time, the light-emitting portions 614 emit light at the second brightness level. When the user presses the button 621 for the third time, the light-emitting portions 614 are turned off.

As shown in FIG. 7, the illumination device 600 further includes a light guide portion 612 and a light-transmissive portion 613. The light guide portion 612 is disposed on the front side of the third circuit board 630. A light guide channel is formed on the light guide portion 612. At least some light-emitting portions 614 are located in the light guide channel. The light guide portion 612 guides the light emitted by the light-emitting portions 614. The light-transmissive portion 613 is disposed on the front side of the light guide portion 612. The light-transmissive portion 613 can protect the third circuit board 630, the light-emitting portions 614, and the light guide portion 612 and ensure that the light of the light-emitting portions 614 can propagate. In this example, the button 621 is movably connected to the light-transmissive portion 613 so that the light-transmissive portion 613 supports the button 621.

As shown in FIG. 8, the blower 10 has a blower axis 101, and the blower axis 101 is collinear with the axis (that is, the axis of the blower tube 270) of the pipe assembly 260. Similarly, the blower axis 101 may be the axis of the blower tube 270. The foremost end 104 of the blower refers to the top of the foremost side of the blower tube 270 close to the edge of the air outlet, and the geometric center 103 of the lamp assembly 610 refers to the geometric center of the largest light-emitting plane of the illumination device 600 for emitting light and illumination. When the blower 10 is in operation, the included angle α between the blower axis 101 and the ground is 25 degrees to 40 degrees. A first length S1 is defined as the length of the projection of the connecting line between the foremost end 104 of the blower 10 and the geometric center 103 of the lamp assembly 610 on the ground, and the first length S1 is greater than or equal to 1 m. In some examples, the first length S1 is greater than or equal to 1.5 m. In some examples, the first length S1 is greater than or equal to 2 m. It is to be understood that those skilled in the art may select the lamp assembly 610 with corresponding performance according to an actual requirement for the first length S1.

In other words, the blower further includes the illumination device, the illumination device includes the light-emitting portion, and when the included angle α between the blower tube axis of the blower tube and a blown surface is 30 degrees and the minimum distance H from the air outlet to the blown surface is 15 cm, the illuminance of light generated by the illumination device is greater than or equal to 50 lux, where the illuminance is measured, in front of the blower, at the point on the blown surface that is 1 m away from the foremost end of the air outlet. In an example, the illuminance of the light generated by the illumination device at this position is greater than or equal to 70 lux. In an example, the illuminance of the light generated by the illumination device at this position is greater than or equal to 100 lux.

In an example, the illuminance of the light generated by the illumination device is greater than or equal to 50 lux, where the illuminance is measured, behind the blower, at the point on the blown surface that is 0.5 m away from the foremost end of the air outlet. In an example, the illuminance of the light generated by the illumination device is greater than or equal to 100 lux, where the illuminance is measured, behind the blower, at the point on the blown surface that is 0.5 m away from the foremost end of the air outlet.

As shown in FIG. 8, S2 denotes the distance between the lamp assembly 610 and the foremost end of the blower 10 along the direction of the blower axis 101, and S3 denotes the length of the blower 10 along the direction of the blower axis 101. S2/S3 is lower than or equal to 0.8. S2/S3 is set within this ratio range so that on the premise of ensuring that the lamp assembly 610 is conveniently mounted, an excessively rearward position of the lamp assembly 610 is avoided. Further, the lamp assembly 610 can be prevented from being blocked by the blower tube 270 and creating an excessively large shadow region on the ground, thereby improving the user experience. In an example, S2/S3 is lower than or equal to 0.7. In some examples, S2/S3 is about 0.55 or 0.45.

A second length S4 is defined as the length of a projection of the connecting line between the foremost end of the blower and the closest end on the ground that can be illuminated by the light-emitting portions on the ground when the blower is in operation, and the second length S4 is greater than or equal to 0.5 m. In an optional solution, the second length S4 is greater than or equal to 1 m.

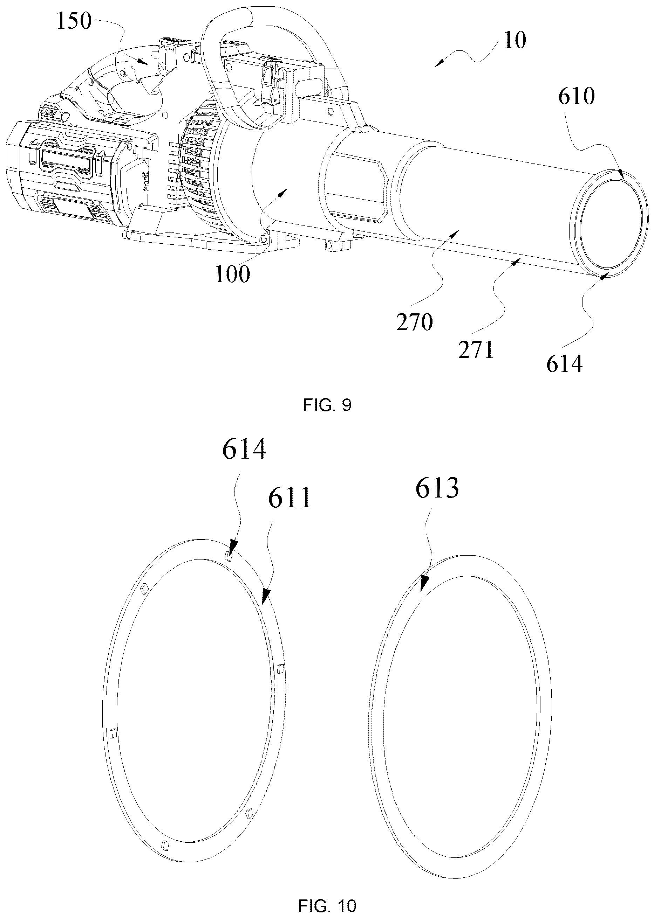

In some examples, as shown in FIG. 9, the lamp assembly 610 is disposed at the air outlet of the blower tube 270. Therefore, other components of the blower 10 do not block the light of the light-emitting portions 614, thereby achieving a better illumination effect.

Optionally, as shown in FIG. 10, the lamp assembly 610 includes a second circuit board 611 and a light-emitting portion 614. The second circuit board 611 is in the shape of a ring and fixed at the air outlet of the blower tube 270. In this example, multiple light-emitting portions 614 are provided. The multiple light-emitting portions 614 are disposed on the second circuit board 611 at intervals and form a ring through enclosure. Thus, the lamp assembly 610 uniformly emits light in all directions. In some examples, the multiple light-emitting portions 614 may form a complete ring through enclosure. It is to be noted that the complete ring means that the multiple light-emitting portions 614 are sequentially connected end to end along the circumferential direction. In some examples, one light-emitting portion 614 may be provided, and the light-emitting portion 614 is configured as a complete ring, thereby further improving the uniformity of light. In this example, the lamp assembly 610 further includes a light-transmissive portion 613, and the light-transmissive portion 613 covers the light-emitting portion 614. The light-transmissive portion 613 not only can ensure smooth transmission of light, but also can protect the light-emitting portion 614 to reduce the risk of damage to the light-emitting portion 614.

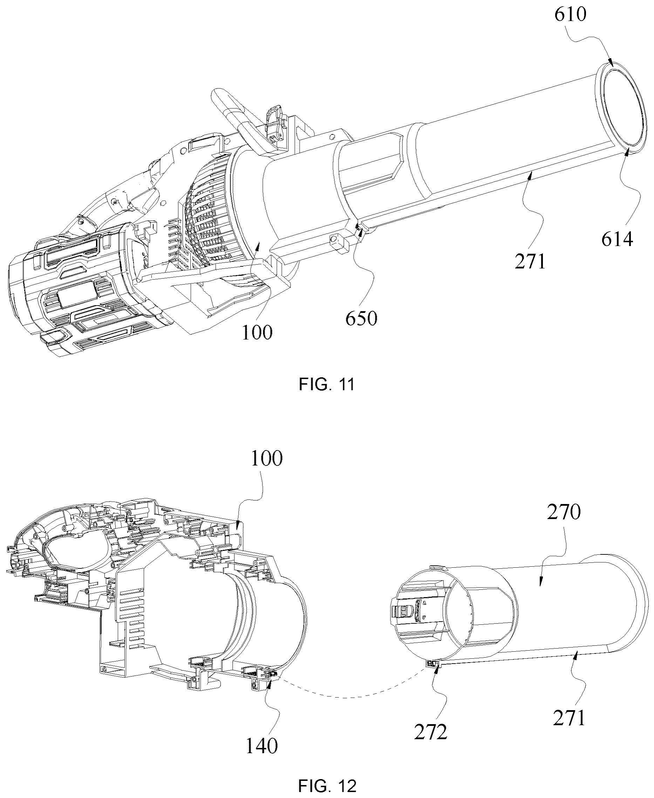

In this example, since the illumination power source/the battery pack 130 and the switch assembly 620 are disposed on the housing 100, the lamp assembly 610 is connected to the illumination power source/the battery pack 130 and the switch assembly 620 through cables. In this regard, as shown in FIG. 11, a cable housing 271 is configured on the blower tube 270, and the cable housing 271 is formed with a channel for a cable of the illumination device 600 to pass through. That is, the cable led out of the lamp assembly 610 passes through the cable channel, then enters the housing 100, and is connected to the illumination power source/the battery pack 130, the switch assembly 620, and the like. Thus, the cable is prevented from being exposed, and the aesthetics of the blower 10 is improved. In this example, the cable housing 271 extends along the axial direction of the blower tube 270. Optionally, the cable housing 271 is integrally formed with the blower tube 270.

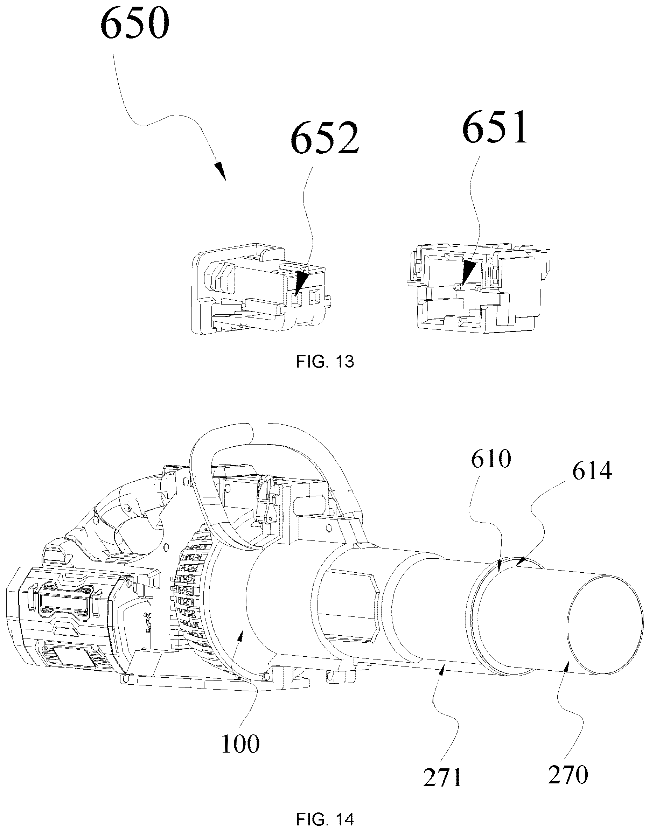

In this example, as shown in FIGS. 12 and 13, the blower tube 270 is detachably connected to the housing 100, and the blower 10 further includes a coupling mechanism 650. The coupling mechanism 650 includes a terminal 651 and a terminal coupling portion 652. The terminal 651 is connected to the blower tube 270, and the cable in the cable housing 271 is electrically connected to the terminal 651. The terminal coupling portion 652 is connected to the housing 100, and the illumination power source/the battery pack 130 and the switch assembly 620 are electrically connected to the terminal coupling portion 652. After the blower tube 270 is connected to the housing 100, the terminal 651 is inserted into and mates with the terminal coupling portion 652 so that the terminal 651 is electrically connected to the terminal coupling portion 652, and thus the lamp assembly 610 is electrically connected to the illumination power source/the battery pack 130 and the switch assembly 620 separately. In this example, the coupling mechanism 650 is provided so that the cable can be prevented from being pulled apart when the blower tube 270 is disassembled, thereby improving the convenience of disassembling and assembling the blower 10.

It is to be understood that on the basis of not departing from the inventive concept of the present application, the terminal 651 and the terminal coupling portion 652 may be of any existing type. In this example, a first limit portion 140 is provided at an end of the housing 100 facing the blower tube 270. The first limit portion 140 may be configured as a slot, and the terminal coupling portion 652 is fixed in the slot. A second limit portion 272 is provided at an end of the cable housing 271 facing the housing 100. The second limit portion 272 is configured as a slot, and the terminal 651 is fixed in the slot.

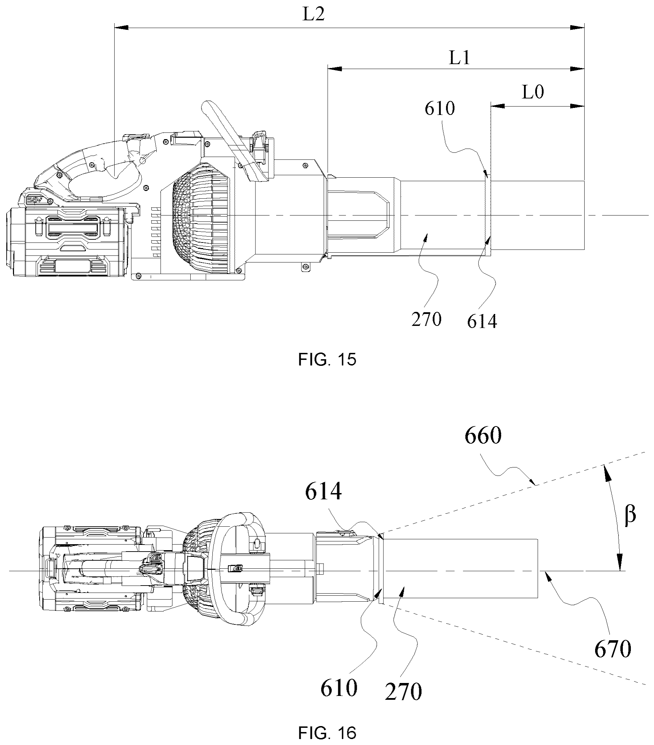

In some examples, as shown in FIGS. 14 and 15, the light-emitting portion 614 is at least partially disposed on the outer wall of the blower tube 270. Compared with the solution that the light-emitting portion 614 is directly disposed at the end of the blower tube 270, the light-emitting portion 614 disposed on the outer wall of the blower tube 270 is not easily damaged by collision. In this example, the lamp assembly 610 is configured as the ring and sleeved on the blower tube 270, thereby improving the aesthetics of the blower 10. In this example, the blower tube 270 is also provided with the cable housing 271 for the cable of the illumination device 600 to pass through and the preceding coupling mechanism 650. The specific details of the cable housing 271 and the coupling mechanism 650 are the same as those in the preceding example, and the details are not repeated here.

As shown in FIG. 15, along the axial direction of the blower tube 270, the distance between the illumination device and the air outlet of the blower tube 270 is L0, and L0 is less than or equal to 900 lm. Typically, the blower tube 270 is detachably connected to the housing 100 so that the user is allowed to replace different types of blower tubes 270. A blower tube length L1 is defined as the length of the blower tube 270 along the axis of the blower, and the ratio L0/L1 of L0 to L1 is higher than or equal to 0 and lower than or equal to 1. The ratio of the distance L0 between the illumination device and the air outlet of the blower tube 270 to the distance L2 from the blower tube 270 to the center of the trigger is higher than or equal to 0 and lower than or equal to 0.7.

As shown in FIG. 16, when viewed downward from directly above the blower 10, a light-emitting region of the light-emitting portion 614 is substantially in the shape of a cone, and the included angle between a generatrix 660 of the cone and the rotation axis 670 of the cone is β, where β is greater than or equal to 0° and less than or equal to 60°. The included angle β is within this range so that it can be ensured that at least the blow region of the blower 10 can be illuminated. Optionally, β may range from 0° to 60°, 10° to 50°, 15° to 45°, and 15° to 30°.

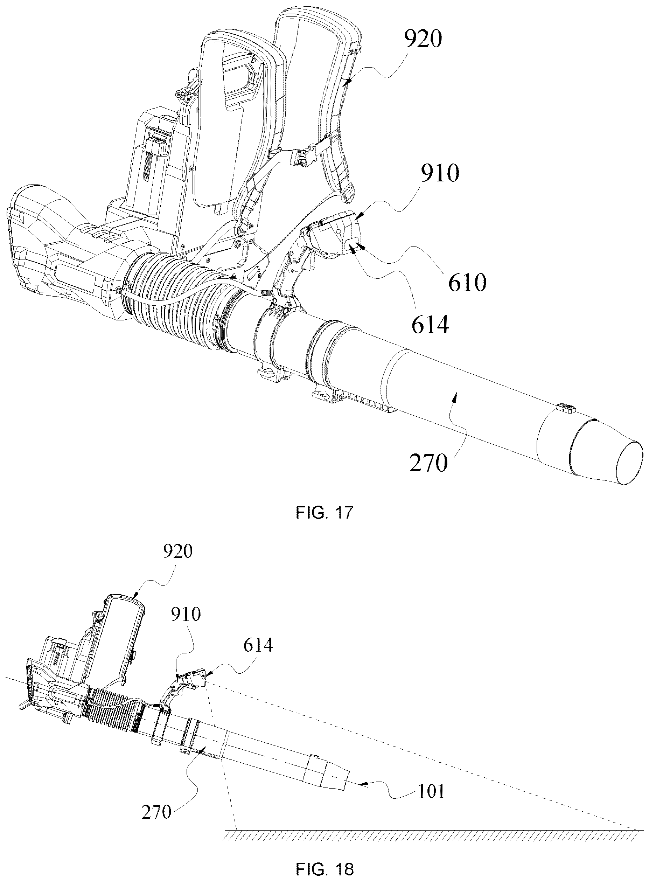

In some examples, as shown in FIGS. 17 and 18, the blower 10 is a backpack blower. The blower 10 further includes a backpack device 920, the backpack device 920 is configured to be carried on the back by the user, and the housing 100 is connected to the backpack device 920. In this example, the blower 10 further includes the operation handle 910. The operation handle 910 is configured to be held by the user and is provided with at least components such as a trigger for controlling an action of the motor. The operation handle 910 is connected to the blower tube 270 or the housing 100. In an example, the operation handle 910 is mounted on the blower tube 270. In this example, the light-emitting portion 614 is disposed on the operation handle 910. Specifically, the housing of the operation handle 910 has a front sidewall, and the light-emitting portion 614 is mounted on the front sidewall. Thus, when the blower is used, the light-emitting portion 614 can illuminate the blow region on the front side of the blower 10 and below the blower 10.

In some examples, the illumination device 600 is configured to be detachable from the blower 10 so that the replacement of the illumination device 600 that fails or is damaged is facilitated.

As shown in FIG. 1, the blower 10 is a handheld blower 10. The handheld blower 10 further includes a display 710, and the display 710 includes an electronic display screen. In an example, the display 710 can display at least one of the electric quantity of the battery pack 130, the output rotational speed of the handheld blower 10, a running gear of the handheld blower 10, a fault prompt, and a Bluetooth connection state. In this manner, the user acquires a current running state of the blower 10 more intuitively and quickly. Further, it is more convenient for the user to adjust subsequent running parameters of the handheld blower 10, thereby improving the user experience. In some examples, the display 710 may display the running gear of the handheld blower 10, the electric quantity of the battery pack 130, and the fault prompt. In some examples, the display 710 may display the output rotational speed of the handheld blower 10, the electric quantity of the battery pack 130, and the fault prompt. It is to be understood that in other examples, the specific display content of the display 710 may be any one or a combination of several of the preceding parameters, which is not specifically limited herein.

In some examples, as shown in FIG. 1, the display 710 is disposed on the front side of the grip 150 so that the display 710 can be prevented from being blocked when the user holds the blower 10, thereby ensuring the convenience of the user in viewing the display 710. It is to be noted that the display 710 is disposed on the front side of the grip 150, which means that the display 710 is disposed on the front side of the position of a hand with which the user holds the grip 150. Regardless of whether the user holds the grip at a forward or backward position, the display 710 is not blocked.

The display 710 is disposed on the housing 100 so that the housing 100 supports the display 710. In an example, the display 710 may be flush with the outer surface of the housing 100 or may protrude from the outer surface of the housing 100, which is not specifically limited herein. In this example, the display 710 is disposed on the housing 100 and is disposed upward, thereby further improving the convenience of the user in viewing the display 710. Of course, in other examples, the display 710 may be configured to face the left, right, front, or rear of the blower 10. In some examples, the display 710 is disposed between the grip 150 and the handle 400 so that the blower 10 has a compact structure. In addition, the display 710 is located between two hands of the user so that the user can view the display 710 without being blocked by the hands.

As shown in FIG. 2, in an example, the minimum distance between the display 710 and the control assembly 720 is less than or equal to 100 mm. In an example, the minimum distance between the display 710 and the control assembly 720 is less than or equal to 50 mm. In this manner, the signal lines between the display 710 and the control assembly 720 can be prevented from being excessively long and entangled. The control assembly 720 is disposed in the space surrounded by the left housing 110 and the right housing 120. The left housing 110 and the right housing 120 are fastened to form a hole, and the display 710 is disposed in the hole.

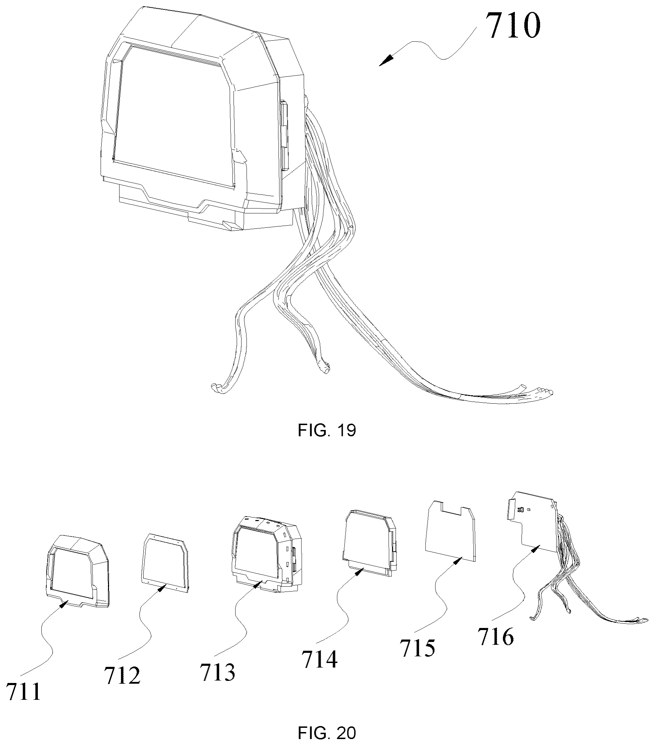

As shown in FIGS. 19 and 20, the display 710 includes a soft-rubber screen housing 711, a light-transmissive screen 712, a hard-rubber screen housing 713, a light source 714, a communication board 715, and a control board 716. The soft-rubber screen housing 711 and the hard-rubber screen housing 713 are fastened together and can support the light-transmissive screen 712, the light source 714, the communication board 715, and the control board 716 so that the display 710 is integrated into a whole and is convenient to mount. In this example, the electronic display screen is formed by at least the light source 714 and the control board 716. The communication board 715 is provided with an Internet of Things (IoT) communication module. In an example, the communication board 715 is provided with a Bluetooth module, a Wi-Fi module, or the like. The control board 716 is a printed circuit board (PCB), and the control board 716 is electrically connected to the control assembly 720 of the blower 10. The light source 714 may be a LCD screen or an LED screen. The light-transmissive screen 712 is disposed on the front side of the light source 714. The light-transmissive screen 712 can allow light from the light source 714 to pass through and can protect the light source 714.

The effective area S of the display 710 is defined as the displayable area of the electronic display screen, and the effective area S is greater than or equal to 4 cm2. In an example, the effective area S is greater than or equal to 9 cm2 and less than or equal to 15 cm2. In some examples, the effective area S is about 8 cm2, 10 cm2, 12 cm2, or 14 cm2.

It is to be understood that the preceding technologies related to the display 710 may be used in the backpack blower 10 and are not specifically limited herein.

It can be seen from the preceding description that the illumination device 600 has at least one light-emitting portion 614, and the light-emitting portion has at least one light-emitting member 615. Different light-emitting portions 614 may be disposed at any two positions on the blower separately. In addition, the two light-emitting portions 614 may be at least 5 cm apart from each other. For example, one light-emitting portion 614 is disposed on the blower tube 270, and the other light-emitting portion 614 is disposed near the grip 150. Each light-emitting portion 614 may include multiple light-emitting members 615, for example, one lamp strip is constituted by multiple lamp beads.

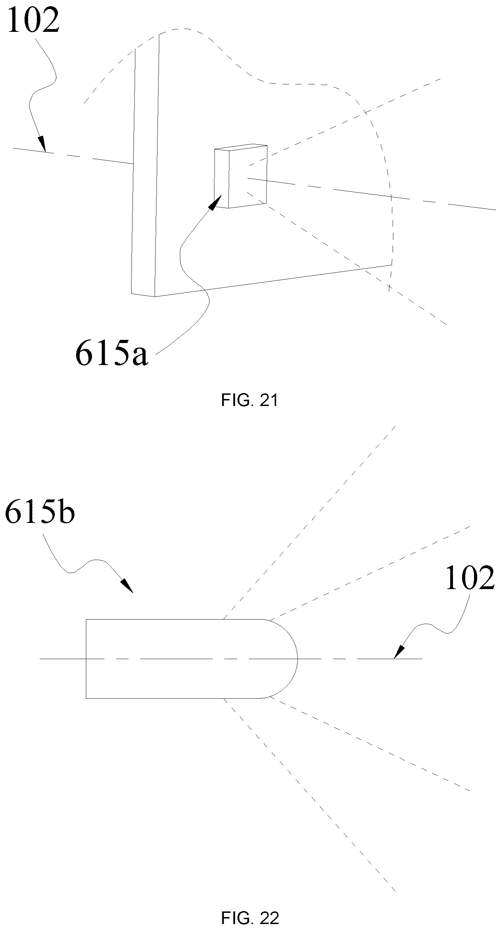

FIGS. 21 and 22 further describe the light-emitting member 615. FIG. 21 is a schematic view of any one light-emitting member 615 in FIG. 5 and FIG. 7, and FIG. 22 is a schematic view of another type of light-emitting member 615b. For the light-emitting member 615a and the light-emitting member 615b, the light-emitting member 615 is defined to extend along a first straight line 102, that is, the light emitted by the light-emitting member 615 is rotationally distributed around the first straight line 102 symmetrically. Specifically, the light-emitting member 615 is a cubic lamp bead, and the light-emitting member 615b is a cylindrical lamp bead.

In an example, the included angle between the first straight line 102 and the blower axis 101 is greater than or equal to 10 degrees and less than or equal to 60 degrees. This configuration is conducive to reducing shadows formed on the ground when the blower tube 270 blocks light.

It is to be noted that all the technical solutions described in the present application may be applied to different airflow devices such as a handheld blower, a backpack blower, or a blower vacuum with a blow mode. When the "airflow device" is mentioned in the present application, the type of the airflow device is not limited. As long as the device does work through the flow of airflows, the device may be referred to as the "airflow device". The "blower" involved in the present application is not limited to the handheld blower, the backpack blower, or the blower vacuum with the blow mode, so the mentioned "blower" should be understood as a general term for various types of blowers unless a specific type of blower is specifically limited in the text.

When it comes to the specific difference between the "handheld blower" and the "backpack blower", we define it from the following perspective: the battery pack 130 of the handheld blower is connected to the housing 110 from one perspective, or in other words, the battery pack coupling portion for mounting the battery pack 130 extends from the housing 110. As shown in FIGS. 1 and 2, the left housing 110 and the right housing 120 together form the battery pack coupling portion for mounting the battery pack 130. The battery pack 130 of the backpack blower is separated from the housing 110, the battery pack coupling portion is separated from the housing 110, and when the backpack blower is in use, the battery pack 130 is carried on the back by the user.

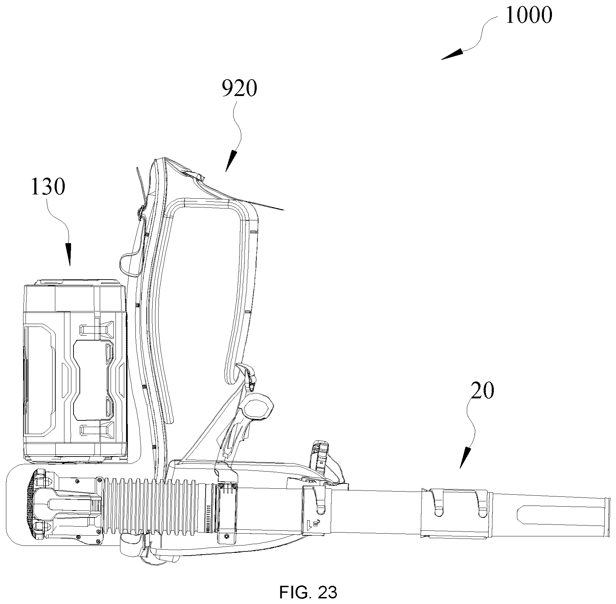

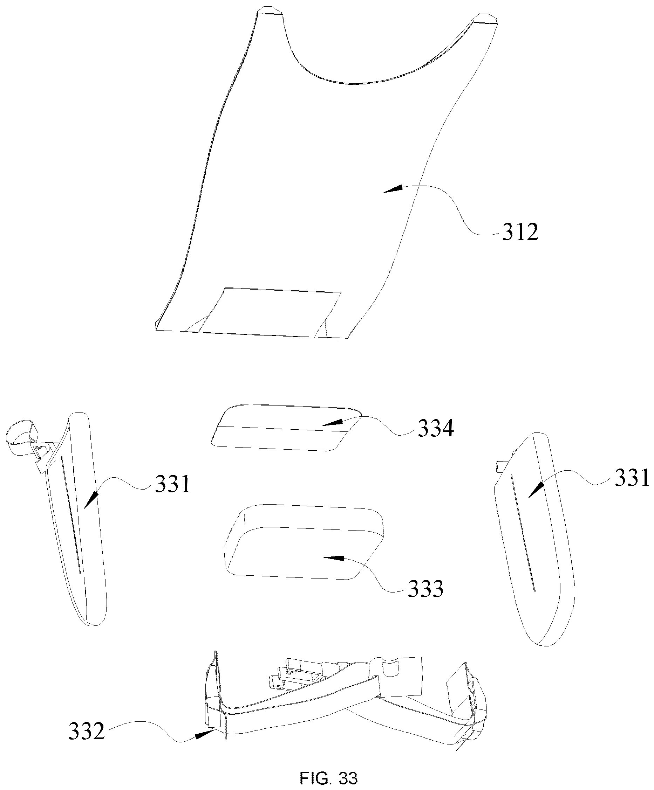

FIGS. 23 to 33 illustrate another example of the present application. As a common garden tool, a blower uses a fan disposed in the blower to generate airflows to help the user clean fallen leaves in a garden. To facilitate portability, backpack blower systems are mostly adopted at present. However, in the related art, most backpack blower systems rely on shoulder straps to bear loads. When the user carries a backpack blower system on the back and works, the user's shoulders continuously bear a substantial portion of the weight of the system. Therefore, the user still feels tired easily, resulting in a poor human-machine experience.

FIG. 23 shows a backpack blower system 1000 as an example in the present application. The backpack blower system 1000 includes a fan, an electric motor, and a battery pack 130. The fan is configured to generate airflows required for the system to work. The electric motor is connected to the fan and drives, through a motor shaft, the fan to rotate around the shaft so that the preceding working airflows are generated. The battery pack 130 is connected to the electric motor and configured to power at least the electric motor.

The backpack blower system 1000 further includes an air duct device 20. The fan is accommodated in the air duct device 20. Moreover, the air duct device 20 is provided with an air duct for guiding the airflows generated by the fan. External air enters from an inlet of the air duct, then the air forms an airflow channel in the air duct by means of the rotation of the fan, and then the air is led to the outside from an outlet of the air duct.

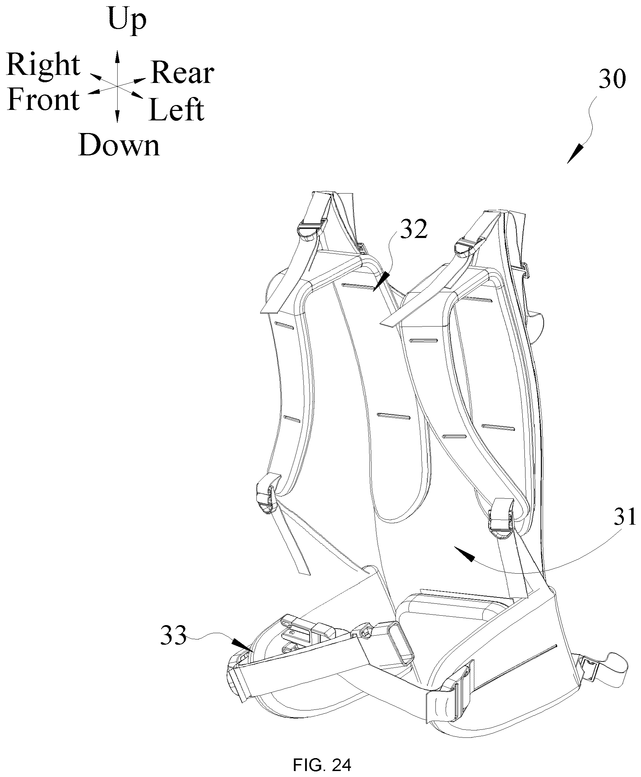

The backpack blower system 1000 further includes the backpack device 920 for the user to wear to carry the blower system on the back. As shown in FIG. 24, the backpack device 920 may include a device body 31, a shoulder strap assembly 32, and a waist belt assembly 33. The device body 31 is configured to support the battery pack 130 and the air duct device 20. In some examples, the battery pack 130 includes a power supply connecting portion that can be detachably connected to the rear side of the device body 31. In some examples, the air duct device 20 includes an air duct connecting portion at the inlet of the air duct. The air duct connecting portion can be detachably connected to the left side of the device body 31 or the right side of the device body 31. The shoulder strap assembly 32 is configured to be worn by the user on the shoulders. The waist belt assembly 33 is configured to be worn by the user on the torso such as the waist. Both the shoulder strap assembly 32 and the waist belt assembly 33 are connected to the device body 31. In some examples, the battery pack 130 includes a battery pack detachably mounted to the device body 31.

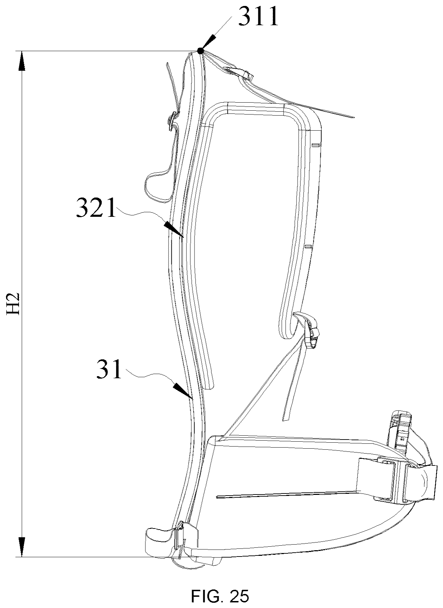

Referring to FIG. 25, the shoulder strap assembly 32 includes a shoulder strap connecting portion 321 connected to the device body 31. The top end 311 of the device body 31 is higher than the shoulder strap connecting portion 321, that is, the highest point 311 of the device body 31 in an up and down direction is beyond the shoulder strap connecting portion 321 in the up and down direction. In the case where the waist belt assembly 33 is provided, since the waist belt assembly 33 is connected to the lower side of the device body 31 and is stuck to the waist of the user after being worn and the top end 311 of the device body 31 is higher than the shoulder strap connecting portion 321, the battery pack 130 and the air duct device 20 are actually supported by the waist of the user through the waist belt assembly 33, and the shoulder belt assembly 32 substantially does not bear the stress in the gravity direction and is used for preventing the system from toppling in a front and rear direction.

In the examples described in FIGS. 23 to 25, the height relationship between the top end of the backpack device body and the shoulder strap connecting portion is adjusted in the case where the waist belt is provided. Thus, the stress transmission in the backpack device is changed so that the weight of the system is transmitted to the waist of a human body with a greater load-bearing capacity, thereby effectively improving the experience of carrying the blower system on the back and improving the comfort of the user when using the blower system.

The device body 31 in the backpack device 920 in the backpack blower system 1000 described above is described in more detail below.

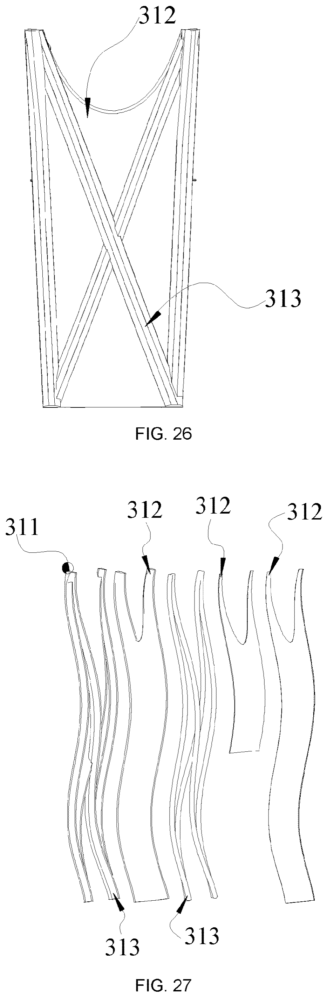

Referring to FIGS. 26 and 27, in some examples, the device body 31 includes a back plate 312 and a support 313. The support 313 is connected to the back plate 312 and supports the back plate 312. For example, the support 313 may be embedded into the back plate 312 or tightly attached to the surface of the back plate 312 to support the back plate 312. The top end 311 of the device body 31 may be the top end of the support 313, that is, the highest point of the support 313 in the up and down direction.

In some examples, the back plate 312 may be made of a first material, and the support 313 may be made of a second material different from the first material. The hardness of the second material may be greater than the hardness of the first material. For example, the back plate 312 may be made of hard plastic, and the support 313 may be made of stainless steel, so as to better implement stress transmission in the backpack device.

In some examples, the support 313 is a high-strength support, and the hardness of the second material forming the support 313 may exceed the hardness of a conventional material. For example, the hardness of the second material is greater than or equal to 150 HR.

In some examples, the back plate 312 and the support 313 include curved portions that are structurally fitted to the curve of the back of the human body. The back plate 321 and the support 313 can make the force transmission between the back of the human body and the back plate and the support more balanced than a conventional back plate and a conventional support with flat and straight structures, thereby improving the comfort of the user when carrying the blower system on the back.

In addition, in some examples, the height H2 of the device body 31 exceeds the conventional distance from the shoulder of the human body to the waist of the human body. For example, H2 is greater than or equal to 55 cm so that it is further ensured that the shoulder strap assembly does not bear a system stress.

The shoulder strap assembly 32 in the backpack device 920 in the backpack blower system 1000 described above is described in more detail below.

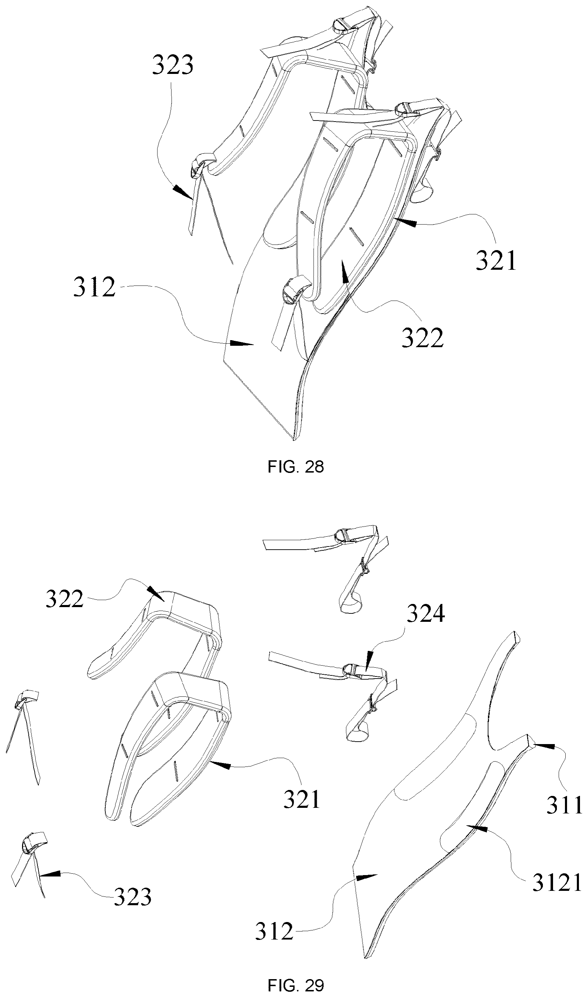

Referring to FIGS. 28 and 29, in some examples, the shoulder strap assembly 32 includes the shoulder strap connecting portion 321 and a shoulder strap body 322. In an example, the shoulder strap body 322 is detachably connected to the device body 31 through the shoulder strap connecting portion 321, and the use length of the shoulder strap body 322 can be adjusted through the shoulder strap connecting portion 321. Although the shoulder strap body 322 is detachably connected to the device body 31 and the use length of the shoulder strap body 322 is variable, the position where the shoulder strap connecting portion 321 is connected to the device body 31 is unchanged and is always lower than the top end 311 in the up and down direction. For example, the shoulder strap connecting portion 321 may be a hook-and-loop fastener disposed on a surface of the shoulder strap body 322. A shoulder strap may be detachably connected, through the hook-and-loop fastener, to an adhesion region 3121 disposed on the upper portion of the inner side of the back plate 312. Although the use length of the shoulder strap can be adjusted through the change of the attachment area of the hook-and-loop fastener, the highest point of the adhesion area 3121 in the up and down direction is still not beyond the top end of the support. Thus, the experience of carrying the blower system on the back is improved, and the shoulder strap connecting portion has both the functions of shoulder strap detachment and shoulder strap length adjustment. In addition, the shoulder strap connecting portion 321 may also be provided with an auxiliary shoulder strap connecting member 324. The auxiliary shoulder strap connecting member 324 connects the shoulder strap body 322 to the device body 31 and assists in the connection between the shoulder strap body 322 and the device body 31 while keeping the shoulder strap connecting portion 321 lower than the top end 311 of the device body 31. In another example, the shoulder strap body 322 may be directly and fixedly connected to the device body 31. For example, the shoulder strap body 322 and the device body 31 are fixed to each other through stitching.

In some examples, the shoulder strap assembly 32 further includes a shoulder strap adjustment member 323 in addition to the shoulder strap connecting portion 321 and the shoulder strap body 322. The shoulder strap body 322 is detachably connected to the waist belt assembly 33 through the shoulder strap adjustment member 323, and the use length of the shoulder strap body 322 can be adjusted in the up and down direction through the shoulder strap adjustment member 323. For example, the shoulder strap adjustment member 323 may be a buckle, where part of the shoulder strap body 322 is inserted into one end of the buckle, and the other end of the buckle is connected to the waist belt assembly 33. The user can adjust the use length of the shoulder strap in the up and down direction by pulling the shoulder strap inserted in the buckle so that the comfort of users having different figures when using the blower system is ensured.

In addition, in some examples, in addition to the shoulder strap connecting portion 321 and the shoulder strap body 322, the shoulder strap assembly 32 may further include a shoulder pad to further reduce the burden on the shoulder of the user.

The waist belt assembly 33 in the backpack device 920 in the backpack blower system 1000 described above is described in more detail below.

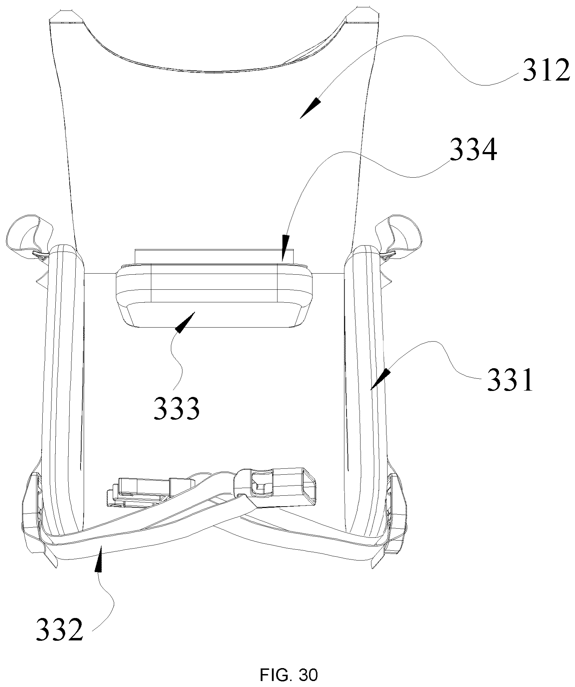

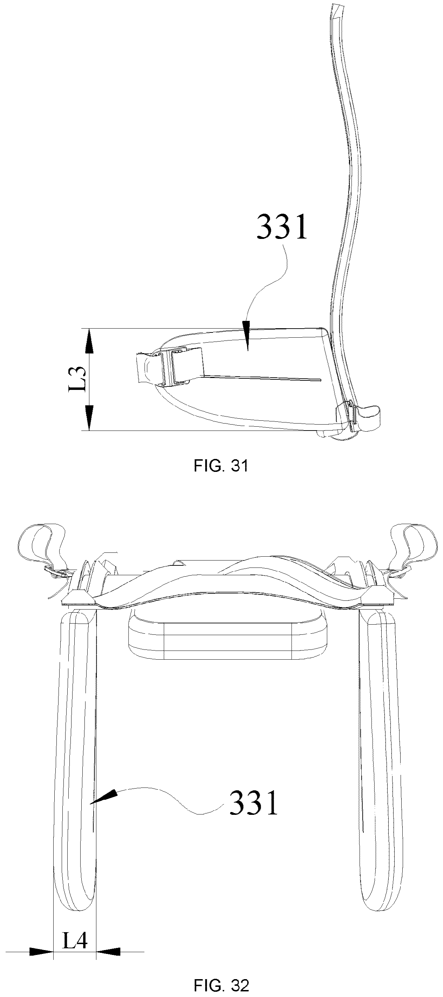

Referring to FIGS. 30 to 33, in some examples, the waist belt assembly 33 includes a waist belt body 331. The waist belt body 331 is configured to fit snugly around the torso of the user so that the waist belt body 331 can completely wrap the waist of the user in the tightened state. Thus, the contact area between the waist belt body 331 and the torso of the user can be increased. As shown in FIG. 31, the maximum width L3 of the waist belt body 331 in the up and down direction may exceed a conventional waist belt width, for example, L3 is greater than or equal to 10 cm. Thus, the stress from the device body 31 is more evenly distributed to the waist of the user through the waist belt body 331. In addition, as shown in FIG. 32, the maximum thickness L4 of the waist belt body 331 may also exceed a conventional waist belt thickness, for example, L4 is greater than or equal to 0.8 cm. This configuration aims to avoid the case where an excessively thin waist belt cannot bear the weight of the system. It is to be understood that adjusting the maximum width and the maximum thickness of the waist belt body 331 is only one of the ways of increasing the contact area between the waist belt body 331 and the torso of the user. In some examples, the width mean and the thickness mean of the waist belt body 331 may be increased.

In some examples, the waist belt body 331 may be made of a third material. A surface friction coefficient of the third material may exceed a surface friction coefficient of a conventional material so that a force exerted by the waist of the user to support the system is effectively transmitted.

In some examples, the waist belt assembly 33 further includes a waist belt adjustment member 332 in addition to the waist belt body 331. The waist belt adjustment member 332 is configured to adjust the use length of the waist belt body 331 in an annular direction around the waist of the user so that the waist belt body 331 wraps the waist of the user. Thus, the waist belt body 331 can be in a tightened state, and the stress from the device body 31 is effectively transmitted to the waist of the user.

In some examples, the waist belt assembly 33 further includes a waist pad 333. The waist pad 333 is filled with sponge or other fillers and has a certain thickness and is disposed between the device body 31 and the lower back of the user. For example, the waist pad 333 may be disposed between the lower side of the back plate and the lower back of the user to bridge the gap between the device body 31 and the lower back of the user and fit snugly around the lower back of the user so that the stress from the device body 31 is effectively transmitted to the lower back of the user.

In some examples, the waist belt assembly 33 further includes a waist pad adjustment member 334 in addition to the waist pad 333. The waist pad 333 is detachably connected to the device body 31 through the waist pad adjustment member 334, and the position of the waist pad 333 on the device body 31 can be adjusted through the waist pad adjustment member 334. For example, the waist pad adjustment member 334 may be a hook-and-loop fastener disposed on a surface of the waist pad 333. The waist pad can be detachably connected, through the hook-and-loop fastener, at any position in a region to which the hook-and-loop fastener is attachable and which is disposed on the lower portion of the inner side of the back plate. This configuration enables the waist pad to work when users having different figures use the blower system, thereby meeting requirements of different groups of people and improving the experience of the user in carrying the blower system on the back.

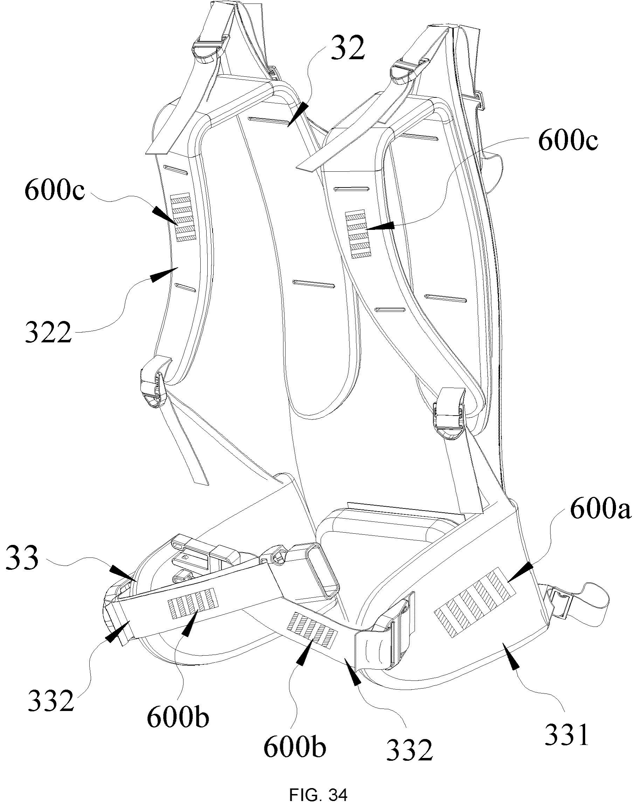

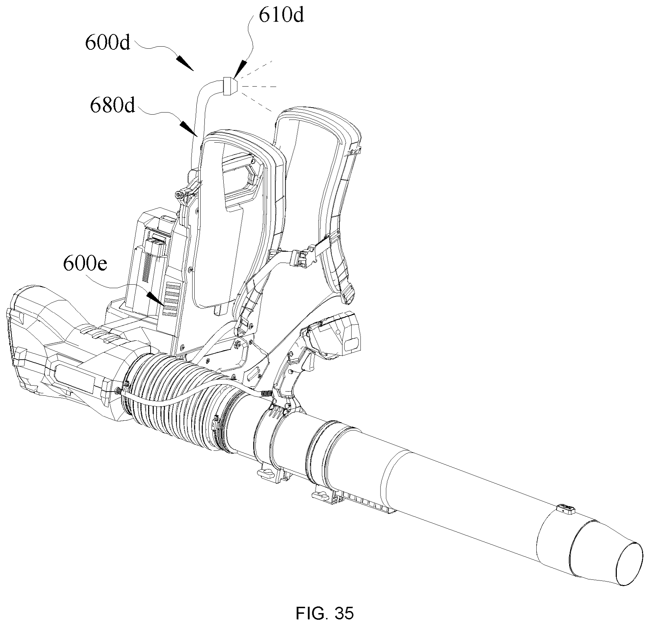

FIGS. 34 and 35 illustrate examples of the backpack blower system 1000 mounted with illumination devices 600. The illumination devices 600a, 600b, 600c, 600d, 600e, and 600f may be disposed at different positions on the backpack blower system 1000.

As shown in FIG. 34, the waist belt assembly 33 may be configured to be provided with illumination devices. Thus, when the backpack blower system 1000 is used, the illumination devices on the waist belt assembly 33 can provide illumination for the user. In an example, the illumination device 600a may be disposed on the waist belt body 331. In an example, the illumination devices 600b may be disposed on the waist belt adjustment member 332. The shoulder strap assembly 32 may be configured to be provided with an illumination device. In an example, the illumination devices 600c may be disposed on the shoulder strap body 322.

As shown in FIG. 35, the illumination device 600d may be configured to be led out from the rear side of the device body 31. The illumination device 600d includes a connecting tube 680d and a lamp assembly 610d. The connecting tube 680d connects the backpack device 920 to the lamp assembly 610d so that the lamp assembly 610d can extend out from the backpack device 920 through a tubular structure. The user can flexibly adjust the illumination angle and range of the illumination device 600d by moving the lamp assembly 610d. In an example, a cable for transmitting energy to the lamp assembly 610d may be disposed in the connecting tube 680d. The cable is connected to the battery pack 130 or another energy source. In an example, the connecting tube 680d is configured to support only the lamp assembly 610d inside the connecting tube 680d, so a hollow or solid structure is provided in the connecting tube 680d. A source for providing energy for the lamp assembly 610d may be disposed in the connecting tube 680d or may be directly mounted in the lamp assembly 610d, for example, a battery pack or the like is built in the lamp assembly 610d. The illumination devices 600e may be disposed on the left and right sides of the backpack device 920. Specifically, the illumination devices 600e may be disposed on the left and right sides of the battery pack 130.

It is to be noted that the illumination device 600a, the illumination devices 600b, the illumination devices 600c, and the illumination devices 600e shown in FIGS. 34 and 35 are all used for showing positions where the illumination device may be disposed, and the shape, size, structure, and other features of the illumination device are not limited. In an example, the structures of the illumination device 600a, the illumination devices 600b, the illumination devices 600c, and the illumination devices 600e may be similar to that of the illumination device 600d. That is, the lamp assembly 610d is connected through the connecting tube 680d to implement illumination, thereby flexibly adjusting the position of the light source. In an example, the backpack blower system 1000 may be provided with multiple illumination devices, that is, two or more of the illumination devices 600a, 600b, 600c, 600d, and 600e may coexist. The user may select several of the illumination devices for use according to actual illumination conditions and may independently choose to turn on one or more illumination devices. A certain illumination device may have different brightness levels. In addition, the illumination device may be configured to have various shapes and structures, such as a lamp strip, a lamp with a snap, or a lamp tube.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack coupling portion configured to connect a battery pack for powering the blower;
wherein the blower further comprises an illumination device, the illumination device comprises a light-emitting portion, and a total lumen of the light-emitting portions of the illumination device is greater than or equal to 280 lm.

2. The blower according to claim 1, wherein the illumination device further comprises a light-transmissive portion, and the light-transmissive portion covers at least part of the light-emitting portions.

3. The blower according to claim 1, wherein the illumination device is configured to be detachable from the blower.

4. The blower according to claim 1, wherein each of the light-emitting portions is one or a combination of at least two of a point light source, a surface light source, and a LED light source.

5. The blower according to claim 1, wherein the light-emitting portion is configured as a complete ring.

6. The blower according to claim 5, wherein when viewed downward from directly above the blower, a light-emitting region of the light-emitting portion is substantially in a shape of a cone, and an included angle between a generatrix of the cone and a rotation axis of the cone is β, where β is greater than or equal to 0° and less than or equal to 60°.

7. The blower according to claim 1, wherein the illumination device comprises a plurality of light-emitting portions, and the plurality of light-emitting portions are arranged at intervals and form a ring through enclosure.

8. The blower according to claim 1, wherein the total lumen of the illumination device is less than or equal to 4680 Im.

9. The blower according to claim 1, wherein a total rated power of the illumination device is greater than or equal to 1.8 W and less than or equal to 27 W.

10. The blower according to claim 1, wherein a color temperature of the illumination device is greater than or equal to 3500 K and less than or equal to 6500 K.

11. The blower according to claim 1, wherein the illumination device is capable of emitting light of at least two colors.

12. The blower according to claim 1, wherein the illumination device is capable of providing a safety indication, a fault indication, and a battery pack power reminder, or the light-emitting portions are capable of projecting images.

13. The blower according to claim 1, wherein the illumination device comprises at least two light-emitting portions.

14. The blower according to claim 1, further comprising an operation handle and a housing, wherein the blower tube is detachably connected to the housing, the operation handle is connected to the blower tube or the housing, and one of the light-emitting portions is disposed on the operation handle.

15. The blower according to claim 14, wherein the illumination device further comprises a switch assembly configured to trigger the one of the light-emitting portions, and the switch assembly is disposed on the operation handle.

16. The blower according to claim 14, further comprising an illumination power source for powering the illumination device.

17. The blower according to claim 1, wherein the light-emitting portions are capable of being off after a preset time following stoppage of the motor.

18. The blower according to claim 1, wherein the illumination device is configured to be capable of adjusting brightness of the light-emitting portions according to ambient brightness.

19. The blower according to claim 1, wherein the illumination device is configured to be capable of transmitting a control signal with a user terminal to adjust light emission parameters of the light-emitting portions.

20. The blower according to any one of claims 1 to 19, wherein the blower is a handheld blower.

21. A handheld blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the handheld blower further comprises an illumination device, the illumination device comprises at least one light-emitting portions, and the at least one light-emitting portions is disposed on the blower tube.

22. The handheld blower according to claim 21, wherein at least part of the light-emitting portions are disposed on an outer wall of the blower tube.

23. The blower according to claim 21, wherein the light-emitting portions are configured as a complete ring.

24. The handheld blower according to claim 21, wherein along an axial direction of the blower tube, a distance between the at least one of the light-emitting portions and an air outlet of the blower tube is L0, and L0 is less than or equal to 900 mm.

25. The handheld blower according to claim 21, wherein a length of the blower tube along an axis of the blower tube is defined as a blower tube length L1, a distance between the at least one of the light-emitting portions and an air outlet of the blower tube is L0, and a ratio LO/L1 of L0 to L1 is higher than or equal to 0 and lower than or equal to 1.

26. The handheld blower according to claim 21, wherein a distance between the at least one of the light-emitting portions and an air outlet of the blower tube is defined as L0, a distance from the blower tube to a center of a trigger is defined as L2, and a ratio of L0 to L2 is higher than or equal to 0 and lower than or equal to 0.7.

27. The handheld blower according to claim 21, wherein a cable housing is configured on the blower tube, and the cable housing is formed with a channel for a cable of the illumination device to pass through.

28. The handheld blower according to claim 27, further comprising a housing and a coupling mechanism, wherein the blower tube is detachably connected to the housing, the coupling mechanism comprises a terminal connected to the blower tube and a terminal coupling portion connected to the housing, the cable is electrically connected to the terminal, and the terminal is inserted into and mates with the terminal coupling portion.

29. The handheld blower according to claim 21, wherein the illumination device further comprises a switch assembly configured to trigger one of the light-emitting portions, and a maximum distance between the switch assembly and the one of the light-emitting portions is less than or equal to 5 cm.

30. The handheld blower according to claim 21, wherein a light-emitting member of one of the light-emitting portions extends along a first straight line, and an included angle between the first straight line and an axis of the blower tube is greater than or equal to 10 degrees and less than or equal to 60 degrees.

31. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack coupling portion configured to connect a battery pack, wherein the battery pack is capable of powering the motor;
wherein the blower further comprises:
an illumination device for illuminating a working region of the blower; and
an illumination power source for powering the illumination device.

32. The blower according to claim 31, further comprising a self-power generation module, wherein the self-power generation module is capable of generating power through winds blown from the blower or sunlight, and the self-power generation module powers the illumination device.

33. The blower according to claim 31, wherein the illumination device comprises a light-emitting portion, and the light-emitting portion is capable of being off after a preset time following stoppage of the motor.

34. The blower according to claim 31, wherein the illumination device comprises a light-emitting portion and is capable of adjusting brightness of the light-emitting portion according to ambient brightness.

35. The blower according to claim 31, wherein the illumination device comprises a light-emitting portion and is capable of transmitting a control signal with a user terminal to adjust a light emission parameter of the light-emitting portion.

36. The blower according to claim 31, wherein the illumination device comprises a light-emitting portion and further comprises a switch assembly, wherein the light-emitting portion is capable of being turned on or off through the switch assembly, and/or brightness of the light-emitting portion is capable of being adjusted through the switch assembly, and/or an emitted color of the light-emitting portion is capable of being selected through the switch assembly, and/or the light-emitting portion is capable of being triggered through the switch assembly to perform projection, and/or a light-emitting mode of the light-emitting portion is capable of being selected through the switch assembly.

37. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device, and a total rated power of the illumination device is greater than or equal to 1.8 W and less than or equal to 27 W.

38. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device, and a color temperature of light emitted by the illumination device is greater than or equal to 3500 K and less than or equal to 6500 K.

39. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device capable of emitting light of at least two colors.

40. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further includes an illumination device, and the illumination device is capable of providing at least one of a safety indication, a fault indication, a battery pack power reminder, or an image projection.

41. A blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device, the illumination device comprises light-emitting portions, and at least one of the light-emitting portions is disposed on the blower tube.

42. The blower according to claim 41, wherein at least part of the light-emitting portions are disposed on an outer wall of the blower tube.

43. The blower according to claim 41, wherein along an axial direction of the blower tube, a distance between the at least one of the light-emitting portions and an air outlet of the blower tube is L0, and L0 is less than or equal to 900 mm.

44. The blower according to claim 41, wherein a cable housing is configured on the blower tube, and the cable housing is formed with a channel for a cable of the illumination device to pass through.

45. The blower according to claim 44, further comprising a housing and a coupling mechanism, wherein the blower tube is detachably connected to the housing, the coupling mechanism comprises a terminal connected to the blower tube and a terminal coupling portion connected to the housing, the cable is electrically connected to the terminal, and the terminal is inserted into and mates with the terminal coupling portion.

46. The blower according to claim 41, wherein the illumination device further comprises a switch assembly configured to trigger one of the light-emitting portions, and a maximum distance between the switch assembly and the one of the light-emitting portions is less than or equal to 5 cm.

47. The blower according to claim 41, wherein the illumination device further comprises a switch assembly, wherein the light-emitting portions are capable of being turned on or off through the switch assembly, and/or brightness of the light-emitting portions are capable of being adjusted through the switch assembly, and/or emitted colors of the light-emitting portions are capable of being selected through the switch assembly, and/or the light-emitting portions are capable of being triggered through the switch assembly to perform projection, and/or light-emitting modes of the light-emitting portions are capable of being selected through the switch assembly.

48. A handheld blower, comprising:
a blower tube for an airflow to pass through;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device, the illumination device comprises a light-emitting portion, the illumination device further comprises a switch assembly configured to trigger the light-emitting portion, and a maximum distance between the switch assembly and the light-emitting portion is less than or equal to 5 cm.

49. A blower, comprising:
a blower tube for an airflow to pass through, wherein the blower tube comprises an air outlet, and the airflow flows out from the air outlet;
a fan assembly comprising fan blades, wherein the fan blades are rotatable about a fan axis of the fan assembly;
a motor configured to drive the fan assembly to rotate; and
a battery pack capable of powering the blower;
wherein the blower further comprises an illumination device, the illumination device comprises a light-emitting portion, and when an included angle α between a blower tube axis of the blower tube and a blown surface is 30 degrees and a minimum distance H from the air outlet to the blown surface is 15 cm, illuminance of light generated by the illumination device is greater than or equal to 50 lux, wherein the illuminance is measured, in front of the blower, at a point on the blown surface that is 1 m away from a foremost end of the air outlet.

50. The blower according to claim 49, wherein the illuminance of the light generated by the illumination device is greater than or equal to 70 lux.

51. The blower according to claim 49, wherein the illuminance of the light generated by the illumination device is greater than or equal to 100 lux.

52. The blower according to claim 49, wherein illuminance of the light generated by the illumination device is greater than or equal to 50 lux, wherein the illuminance is measured, behind the blower, at a point on the blown surface that is 0.5 m away from the foremost end of the air outlet.

53. The blower according to claim 49, wherein illuminance of the light generated by the illumination device is greater than or equal to 100 lux, wherein the illuminance is measured, behind the blower, at a point on the blown surface that is 0.5 m away from the foremost end of the air outlet.
